# EUROPÄISCHE PATENTSCHRIFT

(11) **EP 3 423 401 B1**
(45) Veröffentlichungstag und Bekanntmachung des Hinweises auf die Patenterteilung: **18.08.2021**
(21) Anmeldenummer: 17710678.8
(22) Anmeldetag: 02.03.2017
(51) Int. Cl.: C01B 17/765

(54) **VERFAHREN UND VORRICHTUNG ZUR HERSTELLUNG VON SCHWEFELSÄURE**
PROCESS AND DEVICE FOR THE PREPARATION OF SULFURIC ACID
PROCÉDÉ ET DISPOSITIF DE PRODUCTION D'ACIDE SULFURIQUE

(30) Priorität: 04.03.2016 DE 102016103976
(43) Veröffentlichungstag der Anmeldung: 09.01.2019
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); GUETTA, Zion, 44309 Dortmund (DE)
(74) Vertreter: thyssenkrupp Intellectual Property GmbH
(86) Internationale Anmeldenummer: PCT/EP2017/054890
(87) Internationale Veröffentlichungsnummer: WO 2017/149068

(56) Entgegenhaltungen:
- US-A- 5 538 707
- US-A1- 2014 322 125
- H Müller: "Sulfuric Acid and Sulfur Trioxide", Ullmann's Encyclopedia of Industrial Chemistry, 1. Januar 2000 (2000-01-01), Seiten 1-71, XP055004903, DOI: 10.1002/14356007.a25 Gefunden im Internet: URL:http://onlinelibrary.wiley.com/store/1 0.1002/14356007.a25_635/asset/a25_635.pdf? v=1&t=grevldw3&s=7ec5ccd370065cfefbae3e81a 6107e9b9dc7ca90 [gefunden am 2011-08-16]

## Beschreibung

Die Erfindung betrifft ein Verfahren zur Herstellung von Schwefelsäure - wobei zweckmäßigerweise Schwefel mittels getrockneter Luft in zumindest einer ersten Oxidationsstufe zu Schwefeldioxid oxidiert wird -, wobei Schwefeldioxid in zumindest einer Oxidationsstufe, insbesondere in zumindest einer zweiten Oxidationsstufe zu Schwefeltrioxid oxidiert wird und wobei Schwefeltrioxid in zumindest einer Absorptionsstufe unter Bildung von Schwefelsäure absorbiert wird. Die Erfindung betrifft fernerhin eine Vorrichtung zur Durchführung dieses Verfahrens. - Im Rahmen der Erfindung wird Schwefelsäure insbesondere mittels des Kontaktverfahrens oder Doppelkontaktverfahrens hergestellt. Dabei wird Schwefel zunächst zu Schwefeldioxid oxidiert und anschließend wird das Schwefeldioxid in einem Konverter mittels eines Katalysators zu Schwefeltrioxid weiter oxidiert. Aus dem Schwefeltrioxid wird dann Schwefelsäure erzeugt. Die Schwefelsäure kann beispielsweise zur Erzeugung von phosphathaltigen Düngemitteln oder auch zu anderen Anwendungszwecken verwendet werden.

Verfahren und Vorrichtungen der vorstehend erläuterten Art sind aus der Praxis in verschiedenen Ausführungsformen bekannt.

In der US2014/322125A1 ist ein Verfahren sowie eine Vorrichtung zur Herstellung von Schwefelsäure beschrieben. Dabei wird Schwefel mit in einem Trockenturm getrockneter Luft zu SO₂ verbrannt, welches dann in einer katalytischen Oxidationsstufe zu SO₃ oxidiert wird. Dieses gebildete SO₃ wird nachfolgend in einer Absorptionsstufe unter Bildung von Schwefelsäure in Absorptions-Schwefelsäure absorbiert. Die erhitzte Schwefelsäure wird aus der Absorptionsstufe abgezogen und kann dann zur Erzeugung von Mitteldruck- und Niedrigdruck-Wasserdampf eingesetzt werden, der wiederum als Injektions-Dampf in die Absorptionsstufe eingeführt werden kann.

In der US5,538,707A ist ebenfalls ein Verfahren beschrieben, bei welchem Schwefelsäure durch Absorption von SO₃ gewonnen wird, wobei auch hier eine Energierückgewinnung in Form von Mittel- und Niedrigdruck-Wasserdampf, der wiederum als Injektions-Dampf in die Absorptionsstufe zurückführbar ist, stattfindet.

In der Veröffentlichung von H. Müller: "Sulfuric Acid and Sulfur Trioxide"; Ullmann's Encyclopedia of Industrial Chemistry; 1. Januar 2000 ist ebenfalls ein Verfahren zur Energierückgewinnung durch Dampferzeugung beschrieben.

Bei diesen bekannten Verfahren wird die Verbrennungswärme bei der Oxidation, insbesondere bei der Verbrennung des Schwefels verwertet und zwar vorzugsweise zur Erzeugung von Hochdruck- oder Niedrigdruck- Dampf, Aufheizung von Kesselwasser und Überhitzung von Hochdruckdampf. Die Bildung von Schwefelsäure ist ein exothermer Prozess. Es ist bislang bereits bekannt, diese Wärme durch Wärmeaustausch zwischen der gebildeten heißen Schwefelsäure und einem Fluid - beispielsweise Wasser oder Luft - zurückzugewinnen. Die Effizienz der bekannten Wärmerückgewinnungsprozesse lässt aber zu wünschen übrig. Außerdem ist bei den bekannten Verfahren der zur Verfahrensführung erforderliche Aufwand, insbesondere Apparateaufwand relativ hoch. Insoweit sind die bekannten Maßnahmen verbesserungsfähig.

Demgegenüber liegt der Erfindung das technische Problem zugrunde, ein Verfahren der eingangs genannten Art anzugeben, mit dem eine Maximierung der Wärmerückgewinnung bei relativ geringem Aufwand, insbesondere Apparateaufwand möglich ist. Der Erfindung liegt fernerhin das technische Problem zugrunde, eine entsprechende Vorrichtung zur Durchführung eines solchen Verfahrens anzugeben.

Zur Lösung des technischen Problems lehrt die Erfindung ein Verfahren zur Herstellung von Schwefelsäure, - wobei zweckmäßigerweise Schwefel mittels Luft, insbesondere mittels getrockneter Luft in zumindest einer ersten Oxidationsstufe zu Schwefeldioxid oxidiert, insbesondere verbrannt wird -, wobei das Schwefeldioxid in zumindest einer Oxidationsstufe, insbesondere in zumindest einer zweiten Oxidationsstufe zu Schwefeltrioxid oxidiert wird, wobei Schwefeltrioxid in zumindest einer Absorptionsstufe unter Bildung von Schwefelsäure absorbiert wird, insbesondere von Schwefelsäure absorbiert wird, wobei erhitzte Schwefelsäure aus der Absorptionsstufe abgezogen wird und zur Erzeugung von Wasserdampf eingesetzt wird, welcher Wasserdampf in die Absorptionsstufe eingeführt wird. - Nach bevorzugter Ausführungsform der Erfindung wird Schwefeldioxid durch Oxidation/Verbrennung von Schwefel mittels Luft, insbesondere mittels getrockneter Luft in einer ersten Oxidationsstufe erzeugt. Grundsätzlich kann das Schwefeldioxid für das erfindungsgemäße Verfahren aber auch auf andere Weise erzeugt werden und dann erfindungsgemäß in zumindest einer Oxidationsstufe, insbesondere in zumindest einer zweiten Oxidationsstufe zu Schwefeltrioxid oxidiert werden. - Es liegt im Rahmen der Erfindung, dass in der Absorptionsstufe Schwefeltrioxid im Gegenstrom zu der Schwefelsäure geführt wird. Vorzugsweise wird auch der in die Absorptionsstufe eingeführte Wasserdampf im Gegenstrom zu der Schwefelsäure geführt.

Wesentlich ist bei der Erfindung die Einführung des Wasserdampfes in die Absorptionsstufe. Diese Absorptionsstufe ist - wie weiter unten noch näher erläutert - insbesondere als Zwischen-Absorptionsstufe des Schwefelsäureprozesses ausgebildet. Mit dem Begriff Zwischen-Absorptionsstufe wird im Rahmen der Erfindung insbesondere eine Absorptionsstufe bezeichnet, in der eine erste Absorption von Schwefeltrioxid stattfindet und der Begriff impliziert, dass zumindest eine weitere Absorptionsstufe, insbesondere End-Absorptionsstufe vorhanden ist. - Es liegt im Rahmen der Erfindung, dass der Wasserdampf als Niederdruck-Wasserdampf in die Absorptionsstufe, insbesondere Zwischen-Absorptionsstufe eingeführt wird. Dabei weist der Niederdruck-Wasserdampf zweckmäßigerweise einen Druck von mehr als 0 bar bis 4 bar auf. Die Druckangaben betreffen hier und nachfolgend Angaben des absoluten Druckes. Gemäß einer Ausführungsform der Erfindung wird der Niederdruck-Wasserdampf (wie weiter unten noch erläutert) als Niederdruck-Wasserdampf/Gas-Gemisch in die Absorptionsstufe, insbesondere in die Zwischen-Absorptionsstufe eingeführt. Durch die Absorption von Schwefeltrioxid wird die Schwefelsäure in der Absorptionsstufe aufkonzentriert. Aufgrund der Einleitung des Wasserdampfes erfolgt zugleich eine Verdünnung der Schwefelsäure in der Absorptionsstufe. Durch die bei der Kondensation des Wasserdampfes und bei der Reaktion des Wasserdampfes mit dem Schwefeltrioxid entstehende Wärme wird die Temperatur, insbesondere die Sumpftemperatur in der Absorptionsstufe erhöht. Im Ergebnis entsteht überschüssige erhitzte Schwefelsäure, deren Wärme erfindungsgemäß effizient genutzt werden kann. Erfindungsgemäß wird die überschüssige erhitzte Schwefelsäure aus der Absorptionsstufe abgezogen und nach bevorzugter Ausführungsform zunächst in einer Wärmerückgewinnungseinrichtung zur Erzeugung von Dampf, vorzugsweise von Wasserdampf, insbesondere zur Erzeugung von Mitteldruck-Dampf, vorzugsweise von Mitteldruck-Wasserdampf, verwendet. Dabei weist der Mitteldruck-Dampf, insbesondere der Mitteldruck-Wasserdampf zweckmäßigerweise einen Druck von 4 bis 14 bar auf. Die dabei abgekühlte überschüssige Schwefelsäure wird anschließend für die erfindungsgemäße Erzeugung des Wasserdampfes - zweckmäßigerweise des Niederdruck-Wasserdampfes - eingesetzt, welcher Wasserdampf dann in die Absorptionsstufe eingeführt wird. Diese erfindungsgemäße Verfahrensweise ermöglicht eine sehr effektive Wärmerückgewinnung der eingangs beschriebenen Restwärme. Die dafür möglichen einzelnen bevorzugten Ausführungsformen werden anschließend näher erläutert.

Es liegt im Rahmen der Erfindung, dass die Herstellung der Schwefelsäure mit dem erfindungsgemäßen Verfahren zunächst in an sich bekannter Weise nach einem Kontaktverfahren oder Doppelkontaktverfahren erfolgt. Schwefel wird zweckmäßigerweise zunächst in einer ersten Oxidationsstufe mit Luft/Luftsauerstoff zu Schwefeldioxid oxidiert, insbesondere verbrannt. Die bei der Verbrennung des Schwefels entstehende Verbrennungswärme wird nach bevorzugter Ausführungsform zur Erzeugung von Dampf, vorzugsweise von Wasserdampf, insbesondere zur Erzeugung von Hochdruck-Dampf, vorzugsweise von Hochdruck-Wasserdampf, verwendet. Dabei weist der Hochdruck-Dampf, insbesondere der Hochdruck-Wasserdampf zweckmäßigerweise einen Druck von 14 bis 120 bar, bevorzugt von 30 bar bis 120 bar, auf. Der Hochdruck-Dampf/Hochdruck-Wasserdampf wird beispielsweise in Turbinen eingesetzt.

Es liegt im Rahmen der Erfindung, dass die in die erste Oxidationsstufe eingeführte Luft getrocknet wird. Die Trocknung erfolgt zweckmäßigerweise mit Schwefelsäure und zwar besonders bevorzugt wie nachstehend noch erläutert. Weiterhin liegt es im Rahmen der Erfindung, dass das Schwefeldioxid - vorzugsweise gemeinsam mit Luft - in eine als Konverter ausgebildete Oxidationsstufe, insbesondere zweite Oxidationsstufe eingeführt wird. Hier wird das Schwefeldioxid empfohlenermaßen mit Unterstützung eines Katalysators - insbesondere mittels Vanadiumpentoxid (V₂O₅) als Katalysator - zu Schwefeltrioxid (SO₃) oxidiert. Dazu durchströmt das Schwefeldioxid in dem Konverter vorzugsweise mehrere Katalysatorstufen / Katalysatorbetten.

Erfindungsgemäß wird schwefeldioxidhaltiges und schwefeltrioxidhaltiges Prozessgas aus der Oxidationsstufe, insbesondere aus der zweiten Oxidationsstufe / aus dem Konverter in die als Zwischen-Absorptionsstufe ausgebildete Absorptionsstufe eingeführt. Nach Absorption von Schwefeltrioxid in dieser Zwischen-Absorptionsstufe wird das Prozessgas zweckmäßigerweise wieder in die Oxidationsstufe, insbesondere zweite Oxidationsstufe zurückgeführt. Die in der Zwischen-Absorptionsstufe gebildete überschüssige erhitzte Schwefelsäure wird - wie oben erläutert - aus der Zwischen-Absorptionsstufe abgezogen und erfindungsgemäß eingesetzt. - Vorzugsweise ist die Oxidationsstufe, insbesondere zweite Oxidationsstufe als zweite Oxidationseinrichtung in Form eines mehrstufigen, bevorzugt zweistufigen Konverters ausgebildet, wobei eine erste Konverterstufe über zumindest eine Prozessgas-Abführungsleitung mit der Zwischen-Absorptionsstufe verbunden ist. Nachdem das schwefeldioxidhaltige Prozessgas die erste Konverterstufe durchlaufen hat, wird das Prozessgas über die zumindest eine Prozessgas-Abführungsleitung in die Zwischen-Absorptionsstufe, insbesondere Zwischen-Absorptionseinrichtung eingeführt. Außerdem ist die Zwischen-Absorptionseinrichtung über zumindest eine Prozessgas-Zuführungsleitung mit einer zweiten Konverterstufe der zweiten Oxidationseinrichtung verbunden, so dass das Prozessgas nach Durchströmen der Zwischen-Absorptionseinrichtung in die zweite Konverterstufe einführbar ist. Auf diese Weise durchströmt das Prozessgas den gesamten Konverter / die gesamte zweite Oxidationseinrichtung.

Es liegt im Rahmen der Erfindung, dass das Prozessgas nach Durchlaufen der Oxidationsstufe, insbesondere der zweiten Oxidationsstufe in eine End-Absorptionsstufe / End-Absorptionseinrichtung eingeführt wird. Das in dem Prozessgas noch enthaltene Schwefeltrioxid wird in dieser End-Absorptionsstufe absorbiert und zwar insbesondere von Schwefelsäure absorbiert. Dabei wird die Schwefelsäure in der End-Absorptionsstufe, insbesondere im Sumpf der End-Absorptionseinrichtung durch die Bildung von Schwefelsäure erhitzt. Nach bevorzugter Ausführungsform der Erfindung wird die in der End-Absorptionsstufe erhitzte Schwefelsäure zur Erwärmung von Wasser, insbesondere von Kesselspeisewasser eingesetzt, wobei dieses erwärmte Wasser / Kesselspeisewasser vorzugsweise der Wasserdampferzeugungseinrichtung zugeführt wird und wobei zweckmäßigerweise aus diesem erwärmten Wasser / Kesselspeisewasser der Wasserdampf, insbesondere der Niederdruck-Wasserdampf erzeugt wird, der zwecks Reaktion mit dem Schwefeltrioxid in die Absorptionsstufe eingeführt wird. Auch auf diese Weise kann eine weitere effiziente Wärmerückgewinnung realisiert werden.

Nachfolgend wird die Verwendung der aus der Zwischen-Absorptionsstufe abgezogenen erhitzten Schwefelsäure näher erläutert. Es liegt im Rahmen der Erfindung, dass die aus der Zwischen-Absorptionsstufe abgezogene erhitzte Schwefelsäure der Wärmerückgewinnungseinrichtung zugeführt wird, in der von der Schwefelsäure mitgeführte Wärmeenergie zurückgewonnen wird und zwar insbesondere in Form von Dampf und vorzugsweise in Form von Mitteldruck-Dampf zurückgewonnen wird. Mittels der aus der Zwischen-Absorptionsstufe abgeführten Wärme kann hier eine relativ hohe Menge Mitteldruck-Dampf erzeugt werden und insoweit findet bereits eine effektive Wärmerückgewinnung statt. Die bei der Erzeugung des Dampfes, vorzugsweise Mitteldruck-Dampfes abgekühlte Schwefelsäure wird zumindest zum Teil in der Wasserdampferzeugungseinrichtung zur erfindungsgemäßen Erzeugung des Wasserdampfes, insbesondere des Niederdruck-Wasserdampfes eingesetzt, der dann zwecks Reaktion mit Schwefeltrioxid in die Zwischen-Absorptionsstufe eingeführt wird. - Der in der Wärmerückgewinnungseinrichtung erzeugte Dampf, vorzugsweise Mitteldruck-Dampf wird zweckmäßigerweise abgezogen und der weiteren Verwertung zugeführt. Die in der Wärmerückgewinnungseinrichtung abgekühlte Schwefelsäure wird nach bevorzugter Ausführungsform zum Teil wieder in die Zwischen-Absorptionsstufe zurückgeführt. Insoweit findet empfohlenermaßen eine Kreislaufführung eines Teils der Schwefelsäure zwischen der Zwischen-Absorptionsstufe und der Wärmerückgewinnungseinrichtung statt. Der andere Teil der in der Wärmerückgewinnungseinrichtung abgekühlten Schwefelsäure wird vorzugsweise - wie beschrieben- der Wasserdampferzeugung, insbesondere der Niederdruck-Wasserdampferzeugung zugeführt.

Es liegt somit im Rahmen der Erfindung, dass zumindest ein Teil der aus der Zwischen-Absorptionsstufe/Zwischen-Absorptionseinrichtung abgezogenen Schwefelsäure, insbesondere der aus der Wärmerückgewinnungseinrichtung abgezogenen Schwefelsäure der Wasserdampferzeugungseinrichtung zur erfindungsgemäßen Erzeugung des Wasserdampfes, vorzugsweise Niederdruck-Wasserdampfes zugeführt wird. Zweckmäßigerweise wird in der Wasserdampferzeugungseinrichtung Wasser - insbesondere Kesselspeisewasser - mittels der heißen Schwefelsäure erhitzt und zumindest zum Teil in Wasserdampf - vorzugsweise in Niederdruck-Wasserdampf - umgewandelt. Es empfiehlt sich, dass es sich dabei um Wasser / Kesselspeisewasser handelt, das mittels der aus der End-Absorptionsstufe stammenden erhitzten Schwefelsäure vorgewärmt wurde. Die aus der bevorzugt vorgesehenen Wärmerückgewinnungseinrichtung abgezogene abgekühlte Schwefelsäure ist somit heiß genug, um Wasser / Kesselspeisewasser zu Wasserdampf und insbesondere zu Niederdruck-Wasserdampf umzuwandeln. Der Wasserdampf / Niederdruck-Wasserdampf kann dabei Sauerstoff und/oder andere Gase enthalten, die im Wasser / Kesselspeisewasser gelöst waren. Zuführung von Wasserdampf, insbesondere Niederdruck-Wasserdampf meint hier also auch die Zuführung eines Wasserdampf/Gas-, insbesondere Niederdruck-Wasserdampf/Gas-Gemisches. Dieser Wasserdampf, insbesondere Niederdruck-Wasserdampf wird dann der Zwischen-Absorptionsstufe zur Verdünnung der Schwefelsäure zugeführt. - Gemäß empfohlener Ausführungsvariante der Erfindung wird in der Wasserdampferzeugungseinrichtung lediglich ein Teil des Wassers / Kesselspeisewassers zu Wasserdampf, insbesondere Niederdruck-Wasserdampf umgewandelt und ein weiterer Teil des Wassers/Kesselspeisewassers wird lediglich erhitzt und für den Wärmeaustausch an anderen Komponenten der erfindungsgemäßen Vorrichtung verwendet. Zweckmäßigerweise wird Wasserdampf, insbesondere Niederdruck-Wasserdampf in einem Wasserbehälter von dem Wasser / Kesselspeisewasser durch Entspannungsverdampfung getrennt (geflasht) und der Zwischen-Absorptionsstufe zugeleitet. Dort kondensiert der Wasserdampf, insbesondere Niederdruck-Wasserdampf in der Schwefelsäure und reagiert mit Schwefeltrioxid zu Schwefelsäure. Auf diese Weise wird eine Niedertemperaturquelle in eine heißere Wärmequelle umgewandelt. Das nach der Abtrennung des Wasserdampfes, insbesondere Niederdruck-Wasserdampfes in der Wasserdampferzeugungseinrichtung verbleibende Wasser / Kesselspeisewasser wird insbesondere in die Wärmerückgewinnungseinrichtung eingeleitet und dort wird zweckmäßigerweise aus dem Wasser / Kesselspeisewasser Dampf, vorzugsweise Mitteldruck-Dampf erzeugt. So kann das Wasser aus der Wasserdampferzeugungseinrichtung als Mitteldruck-Kesselspeisewasser der Wärmerückgewinnungseinrichtung zugeführt werden. Weiterhin kann das Wasser aus der Wasserdampferzeugungseinrichtung als Hochdruck-Kesselspeisewasser weiteren Komponenten der erfindungsgemäßen Vorrichtung zum Wärmeaustausch zugeleitet werden. Es liegt dabei im Rahmen der Erfindung, dass entsprechende Pumpen zur Weiterförderung des Mitteldruck-Kesselspeisewassers und/oder des Hochdruck-Kesselspeisewassers vorhanden sind.

Bei der erfindungsgemäßen Erzeugung von Wasserdampf in der Wasserdampferzeugungseinrichtung verbleibt abgekühlte Schwefelsäure, die zweckmäßigerweise aus der Wasserdampferzeugungseinrichtung abgezogen und weiterverwendet wird. Diese abgekühlte Schwefelsäure hat beispielsweise eine Temperatur von ca. 95 °C. Eine besonders bevorzugte Ausführungsform der Erfindung ist dadurch gekennzeichnet, dass aus der Wasserdampferzeugungseinrichtung abgezogene abgekühlte Schwefelsäure der End-Absorptionsstufe / End-Absorptionseinrichtung zugeführt wird, in der bevorzugt Schwefeltrioxid im Gegenstrom zu dieser Schwefelsäure geführt wird und von dieser Schwefelsäure absorbiert wird. Fernerhin liegt es im Rahmen der Erfindung, dass aus der Wasserdampferzeugungseinrichtung abgezogene abgekühlte Schwefelsäure zur Trocknung der für die Oxidation des Schwefels in der ersten Oxidationsstufe erforderlichen Luft eingesetzt wird. Dazu wird die aus der Wasserdampferzeugungseinrichtung abgezogene Schwefelsäure vorzugsweise in eine der ersten Oxidationseinrichtung vorgeschaltete Trocknungseinrichtung eingeführt, in der bevorzugt die Luft im Gegenstrom zu der in die Trocknungseinrichtung eingeleiteten Schwefelsäure geführt wird. - Eine besonders bevorzugte Ausführungsform der Erfindung ist dadurch gekennzeichnet, dass aus der Wasserdampferzeugungseinrichtung abgezogene abgekühlte Schwefelsäure in die Zwischen-Absorptionsstufe zurückgeführt wird. Dazu wird zweckmäßigerweise das durch die Zwischen-Absorptionsstufe/Zwischen-Absorptionseinrichtung strömende schwefeltrioxidhaltige Prozessgas im Gegenstrom zu der zurückgeführten Schwefelsäure geführt.

Zur Lösung des technischen Problems lehrt die Erfindung weiterhin eine Vorrichtung zur Herstellung von Schwefelsäure, wobei zweckmäßigerweise eine erste Oxidationseinrichtung für die Erzeugung von Schwefeldioxid vorgesehen ist, wobei eine Oxidationseinrichtung, insbesondere eine zweite Oxidationseinrichtung für die Oxidation von Schwefeldioxid zu Schwefeltrioxid vorhanden ist, wobei an die Oxidationseinrichtung, insbesondere an die zweite Oxidationseinrichtung zumindest eine Absorptionseinrichtung - insbesondere eine Zwischen-Absorptionseinrichtung - für die Absorption des Schwefeltrioxids, vorzugsweise mittels Schwefelsäure angeschlossen ist, wobei die Absorptionseinrichtung, insbesondere Zwischen-Absorptionseinrichtung an eine Wasserdampferzeugungseinrichtung mit der Maßgabe angeschlossen ist, dass aus der Absorptionseinrichtung/Zwischen-Absorptionseinrichtung erhitzte Schwefelsäure der Wasserdampferzeugungseinrichtung zwecks Erzeugung von Wasserdampf zuführbar ist und wobei aus der Wasserdampferzeugungseinrichtung Wasserdampf in die Absorptionseinrichtung, insbesondere Zwischen-Absorptionseinrichtung einführbar ist. Dabei wird der Wasserdampf zweckmäßigerweise zusammen mit aus der Oxidationseinrichtung, insbesondere aus der zweiten Oxidationseinrichtung zugeführtem Prozessgas in die Absorptionseinrichtung, insbesondere Zwischen-Absorptionseinrichtung eingeführt.

Eine empfohlene Ausführungsform der erfindungsgemäßen Vorrichtung zeichnet sich dadurch aus, dass eine Trocknungseinrichtung zur Trocknung von Luft vorgesehen ist, wobei die getrocknete Luft in die erste Oxidationseinrichtung zur Oxidation, insbesondere Verbrennung von Schwefel zu Schwefeldioxid eingeführt wird. Dabei ist die Trocknungseinrichtung bevorzugt so mit der Absorptionseinrichtung / Zwischen-Absorptionseinrichtung verbunden, dass überschüssige Schwefelsäure aus der Absorptionseinrichtung, insbesondere Zwischen-Absorptionseinrichtung zur Trocknung der Luft in die Trocknungseinrichtung einführbar ist.

Erfindungsgemäß ist die Oxidationseinrichtung, insbesondere die zweite Oxidationseinrichtung als mehrstufiger, vorzugsweise zweistufiger Konverter ausgebildet, wobei jede Konverterstufe zumindest einen Katalysatorboden, bevorzugt eine Mehrzahl von Katalysatorböden aufweist. Erfindungsgemäß ist eine erste Konverterstufe des Konverters über zumindest eine Prozessgas-Abführungsleitung mit der Absorptionseinrichtung, insbesondere Zwischen-Absorptionseinrichtung verbunden und die Absorptionseinrichtung, insbesondere Zwischen-Absorptionseinrichtung ist über zumindest eine Prozessgas-Zuführungsleitung mit einer zweiten Konverterstufe des Konverters verbunden. Auf diese Weise kann schwefeldioxidhaltiges und schwefeltrioxidhaltiges Prozessgas aus der ersten Konverterstufe durch die Absorptionseinrichtung, insbesondere Zwischen-Absorptionseinrichtung strömen und anschließend in die zweite Konverterstufe der Oxidationseinrichtung, insbesondere der zweiten Oxidationseinrichtung eingeführt werden.

In der Absorptionseinrichtung, insbesondere Zwischen-Absorptionseinrichtung wird Schwefeltrioxid aus dem Prozessgas von Schwefelsäure absorbiert. Gemäß bevorzugter Ausführungsform ist die Absorptionseinrichtung, insbesondere Zwischen-Absorptionseinrichtung an eine Wärmerückgewinnungseinrichtung angeschlossen, wobei diese Wärmerückgewinnungseinrichtung bevorzugt zumindest einen Dampfkessel - vorzugsweise zumindest einen Mitteldruck-Dampfkessel - aufweist. Die aus der Absorptionseinrichtung, insbesondere Zwischen-Absorptionseinrichtung abgezogene erhitzte Schwefelsäure wird hier vorzugsweise zur Erhitzung von Kesselspeisewasser, insbesondere zur Erzeugung von Mitteldruck-Dampf eingesetzt und dabei wird Wärmeenergie von der Schwefelsäure auf das Kesselspeisewasser übertragen. Es liegt im Rahmen der Erfindung, dass entsprechend abgekühlte Schwefelsäure der Wasserdampferzeugungseinrichtung zwecks der erfindungsgemäßen Erzeugung des Wasserdampfes zugeführt wird. Vorzugsweise wird ein Teil der in der Wärmerückgewinnungseinrichtung abgekühlten Schwefelsäure in die Absorptionseinrichtung, insbesondere Zwischen-Absorptionseinrichtung zurückgeführt.

Nach besonders bevorzugter Ausführungsform der Erfindung weist die Wasserdampferzeugungseinrichtung zumindest eine Kühleinrichtung auf, in der Wasser -vorzugsweise Kesselspeisewasser- mit Hilfe der aus der Wärmerückgewinnungseinrichtung abgezogenen Schwefelsäure erwärmt und zumindest teilweise verdampft wird. An die Kühleinrichtung ist zweckmäßigerweise zumindest ein Wasserbehälter - vorzugsweise Kesselspeisewasser-Behälter - angeschlossen, in welchem Wasserbehälter Wasserdampf von dem Wasser / Kesselspeisewasser durch Entspannungsverdampfung getrennt (geflasht) wird. Es liegt im Rahmen der Erfindung, dass der Wasserbehälter / Kesselspeisewasser-Behälter an die Absorptionseinrichtung, insbesondere Zwischen-Absorptionseinrichtung angeschlossen ist, so dass Wasserdampf, insbesondere Niederdruck-Wasserdampf von dem Wasserbehälter in die Absorptionseinrichtung, insbesondere Zwischen-Absorptionseinrichtung einleitbar ist. Hier wird gleichsam eine Niedertemperaturquelle in eine heißere Wärmequelle umgewandelt.

Eine empfohlene Ausführungsform der erfindungsgemäßen Vorrichtung zeichnet sich dadurch aus, dass die Wasserdampferzeugungseinrichtung mit einer/der End-Absorptionseinrichtung verbunden ist und/oder mit einer/der Trocknungseinrichtung für die Trocknung der Luft verbunden ist, die der ersten Oxidationseinrichtung zugeführt wird. Durch diese Anschlussmöglichkeiten wird die aus der Wasserdampferzeugungseinrichtung abgezogene abgekühlte Schwefelsäure in die End-Absorptionseinrichtung zur Absorption von Schwefeltrioxid eingeleitet und/oder in die Trocknungseinrichtung für die Trocknung der Luft für die Verbrennung des Schwefels eingeleitet. - Eine sehr bevorzugte Ausführungsform der erfindungsgemäßen Vorrichtung ist fernerhin dadurch gekennzeichnet, dass die Wasserdampferzeugungseinrichtung an die Absorptionseinrichtung, insbesondere Zwischen-Absorptionseinrichtung mit der Maßgabe angeschlossen ist, dass von der Wasserdampferzeugungseinrichtung abgezogene abgekühlte Schwefelsäure zur Absorption von Schwefeltrioxid in die Absorptionseinrichtung, insbesondere Zwischen-Absorptionseinrichtung einführbar ist.

Der Erfindung liegt die Erkenntnis zugrunde, dass mit dem erfindungsgemäßen Verfahren und mit der erfindungsgemäßen Vorrichtung eine sehr effektive und funktionssichere Wärmerückgewinnung bei der Schwefelsäureerzeugung möglich ist. Vor allem die eingangs erläuterte Restwärme des Prozesses kann effizient und funktionssicher übertragen und genutzt werden. Der Erfindung liegt weiterhin die Erkenntnis zugrunde, dass diese vorteilhafte Rückgewinnung der Restwärme insbesondere realisiert werden kann, wenn aus einer Niedertemperaturwärmequelle Wasserdampf, vorzugsweise Niederdruck-Wasserdampf erzeugt wird und im Schwefelsäureprozess zu Mitteldruck-Dampf und/oder Hochdruck-Dampf umgewandelt wird. Es liegt dabei im Rahmen der Erfindung, dass eine Niedertemperaturwärmequelle in eine heißere Wärmequelle umgewandelt wird. Besondere Bedeutung kommt in diesem Zusammenhang der funktionellen Wechselwirkung zwischen der Absorptionsstufe, insbesondere Zwischen-Absorptionsstufe und der Wasserdampferzeugungseinrichtung zu und vor allem der funktionelle Zusammenhang Absorptionsstufe/Zwischen-Absorptionsstufe - Wärmerückgewinnungseinrichtung - Wasserdampferzeugungseinrichtung. Im Ergebnis wird mit der Erfindung eine Maximierung der Wärmerückgewinnung bei zugleich einfacher Verfahrensführung erzielt. Erfindungsgemäß kann bis zu 95 % der Reaktionswärme des Schwefelsäureprozesses als hochwertige Wärme bei geringem Aufwand zurückgewonnen werden. Der im Rahmen der Erfindung erforderliche Aufwand, insbesondere Apparateaufwand ist vielmehr im Vergleich zu dem erzielten Erfolg überraschend gering und dementsprechend sind auch die erforderlichen Kosten verhältnismäßig gering.

Nachfolgend wird das erfindungsgemäße Verfahren anhand einer Wärmebilanz näher erläutert. Mit dem Schwefelverbrennungs-Schwefelsäureprozess sind die folgenden Reaktionswärmen verbunden:

| **Reaktion** | **Reaktionswärme** |
|---|---|
| | ΔH_{R}°_{(25°C)}[kWh/t 100 % H₂SO₄] |
| S + O₂ →SO₂ | - 850 |
| SO₂ + ½ O₂ → SO₃ | - 283 |
| SO₃ + H₂O → H₂SO₄ | - 368 |

Somit ergibt sich eine gesamte Reaktionswärme des Prozesses von etwa - 1500 kWh/t 100 % H₂SO₄. - Bei der Erzeugung von Hochdruck-Dampf mit Hilfe der Verbrennungswärme der Schwefelverbrennung in der ersten Oxidationseinrichtung wird eine Wärmerückgewinnung von ca. 600 kWh/t 100 % H₂SO₄ erreicht. Weiterhin werden noch ca. 385 kWh/t 100 % H₂SO₄ bei der Überhitzung des Hochdruck-Dampfes oder bei der Aufheizung von Hochdruck-Kesselspeisewasser zurückgewonnen. Die Differenz zwischen der gesamten Reaktionswärme des Prozesses und der zurückgewonnenen Wärme ergibt eine Restwärme von ca. 516 kWh/t 100 % H₂SO₄.

Bei der Verwendung der Wärme aus der Zwischen-Absorptionsstufe zur Erzeugung von Mitteldruck-Dampf in der Wärmerückgewinnungseinrichtung kann eine Wärme von bis zu ca. 140 kWh/t 100 % H₂SO₄ zurückgewonnen werden. Die Wärmerückgewinnung in der Wasserdampferzeugungseinrichtung beträgt ca. 220 kWh/t 100 % H₂SO₄ und davon hat die Verdampfung des Wassers einen Anteil von ca. 145 kWh/t 100 % H₂SO₄. Bei der Erwärmung des der Wasserdampferzeugungseinrichtung zugeführten Wassers / Kesselspeisewassers mittels der aus der End-Absorptionsstufe abgezogenen erhitzten Schwefelsäure ist eine weitere Wärmerückgewinnung von etwa 85 kWh/t 100 % H₂SO₄ verbunden. - Im Ergebnis beträgt somit die insgesamt zurückgewonnene Wärme etwa 95 % der Reaktionswärme des Schwefelverbrennungs-Schwefelsäureprozesses.

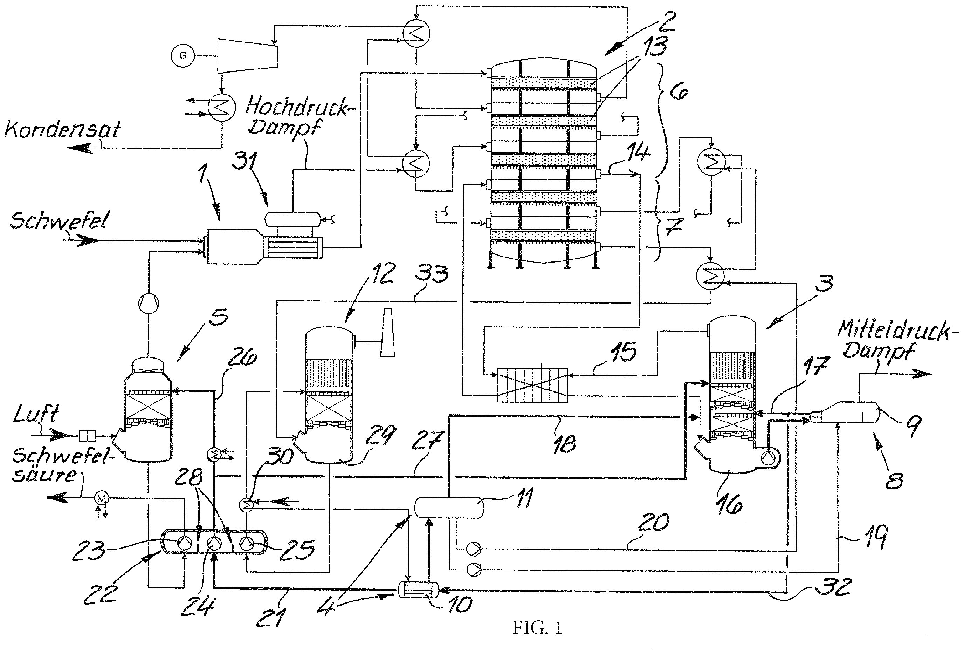

Nachfolgend wird die Erfindung anhand einer lediglich ein Ausführungsbeispiel darstellenden Zeichnung näher erläutert. - Die einzige Figur zeigt schematisch das Schaltbild einer Vorrichtung für die Durchführung des erfindungsgemäßen Verfahrens zur Herstellung von Schwefelsäure. Einer ersten Oxidationseinrichtung 1 werden Schwefel und Luft zur Oxidation, insbesondere zur Verbrennung von Schwefel zu Schwefeldioxid zugeführt. Die zugeführte Luft wird dabei vorher in der Trocknungseinrichtung 5 getrocknet und zwar vorzugsweise und im Ausführungsbeispiel mit Schwefelsäure, wobei die zugeführte Luft in der Trocknungseinrichtung 5 im Gegenstrom zu der eingeleiteten Schwefelsäure geführt wird. - Die Verbrennungswärme bei der Verbrennung des Schwefels in der ersten Oxidationseinrichtung 1 wird bevorzugt und im Ausführungsbeispiel zur Erzeugung von Hochdruck-Dampf verwendet. Dazu ist im Ausführungsbeispiel zweckmäßigerweise ein Hochdruck-Dampfkessel 31 vorgesehen.

Aus der ersten Oxidationseinrichtung 1 wird schwefeldioxidhaltiges Prozessgas in die zweite Oxidationseinrichtung 2 eingeführt. Die zweite Oxidationseinrichtung 2 ist dabei bevorzugt und im Ausführungsbeispiel als zweistufiger Konverter mit einer ersten Konverterstufe 6 und einer zweiten Konverterstufe 7 ausgebildet. Im Ausführungsbeispiel weist jede Konverterstufe 6, 7 eine Mehrzahl von Katalysatorböden 13 auf. Aus der ersten Konverterstufe 6 wird schwefeldioxidhaltiges und schwefeltrioxidhaltiges Prozessgas über die Prozessgas-Abführungsleitung 14 in die Zwischen-Absorptionseinrichtung 3 eingeführt. In dieser Zwischen-Absorptionseinrichtung 3 wird bevorzugt und im Ausführungsbeispiel das Prozessgas im Gegenstrom zu Schwefelsäure geführt, so dass in dem Prozessgas enthaltenes Schwefeltrioxid von der Schwefelsäure absorbiert wird. Anschließend wird das Prozessgas wieder aus der Zwischen-Absorptionseinrichtung 3 abgezogen und im Ausführungsbeispiel über eine Prozessgas-Zuführungsleitung 15 in die zweite Konverterstufe 7 der zweiten Oxidationseinrichtung 2 eingeführt. Somit strömt das Prozessgas zunächst durch die erste Konverterstufe 6 der zweiten Oxidationseinrichtung 2, dann durch die Zwischen-Absorptionseinrichtung 3 und anschließend durch die zweite Konverterstufe 7 der zweiten Oxidationseinrichtung 2. Schließlich strömt das Prozessgas vorzugsweise und im Ausführungsbeispiel aus der zweiten Oxidationseinrichtung 2 in die End-Absorptionseinrichtung 12, in der noch verbleibendes Schwefeltrioxid aus dem Prozessgas von Schwefelsäure absorbiert wird. Dazu wird das aus der zweiten Oxidationseinrichtung 2 stammende Prozessgas in der End-Absorptionseinrichtung 12 im Gegenstrom zu in die End-Absorptionseinrichtung 12 eingeleiteter Schwefelsäure geführt.

Es liegt im Rahmen der Erfindung, dass in die Zwischen-Absorptionseinrichtung 3 außer dem Prozessgas und Schwefelsäure zusätzlich der erfindungsgemäß gebildete Wasserdampf eingeführt wird. Das wird weiter unten noch näher erläutert. Mit der in der Zwischen-Absorptionseinrichtung 3 stattfindenden Kondensation des Wasserdampfes in der Schwefelsäure und der Reaktion des Wasserdampfes mit Schwefeltrioxid ist eine starke Wärmeentwicklung verbunden. Dadurch entsteht in der Zwischen-Absorptionseinrichtung 3 erhitzte Schwefelsäure. Diese erhitzte Schwefelsäure wird bevorzugt und im Ausführungsbeispiel aus dem Sumpf 16 der Zwischen-Absorptionseinrichtung 3 abgezogen und der Wärmerückgewinnungseinrichtung 8 zugeführt. Die Wärmerückgewinnungseinrichtung 8 weist bevorzugt und im Ausführungsbeispiel einen Mitteldruck-Dampfkessel 9 zur Erzeugung von Mitteldruck-Dampf auf. Aus dieser Wärmerückgewinnungseinrichtung 8 wird abgekühlte Schwefelsäure abgezogen und kann über die Einführungsleitung 17 zurück in die Zwischen-Absorptionseinrichtung 3 geführt werden. Die Temperatur im Sumpf 16 der Zwischen-Absorptionseinrichtung 3 beträgt beispielsweise 200 bis 220 °C. Diese Sumpftemperatur kann über die Umwälzmenge an Schwefelsäure von der Zwischen-Absorptionseinrichtung 3 über den Mitteldruck-Dampfkessel 9 eingestellt werden. Der im Mitteldruck-Dampfkessel 9 erzeugte Mitteldruck-Dampf weist zweckmäßigerweise einen Druck von 9 bis 12 bar, beispielsweise von 10 bar auf. - Wesentlich ist im Rahmen der Erfindung, dass überschüssige Schwefelsäure aus der Zwischen-Absorptionseinrichtung 3 und insbesondere aus der Wärmerückgewinnungseinrichtung 8, insbesondere aus dem Schwefelsäurekreislauf der Wärmerückgewinnungseinrichtung 8 abgezogen wird. Empfohlenermaßen und im Ausführungsbeispiel wird in der Wärmerückgewinnungseinrichtung 8 abgekühlte überschüssige Schwefelsäure über die Ausschleusungsleitung 32 der Wasserdampferzeugungseinrichtung 4 zwecks Erzeugung von Wasserdampf, insbesondere zur Erzeugung von Niederdruck-Wasserdampf zugeführt. Dieser Niederdruck-Wasserdampf wird dann aus der Wasserdampferzeugungseinrichtung 4 über die Einspeiseleitung 18 in die Zwischen-Absorptionseinrichtung 3 eingeführt. Dabei wird vorzugsweise und im Ausführungsbeispiel der Niederdruck-Wasserdampf zusammen mit dem Prozessgas aus der ersten Konverterstufe 6 in die Zwischen-Absorptionseinrichtung 3 eingeführt.

Empfohlenermaßen und im Ausführungsbeispiel weist die Wasserdampferzeugungseinrichtung 4 eine Kühleinrichtung 10 auf, in der die Schwefelsäure weiter abgekühlt wird und in der Kesselspeisewasser erwärmt und teilweise zu dem Wasserdampf, insbesondere Niederdruck-Wasserdampf verdampft wird. Dieser Niederdruck-Wasserdampf enthält in der Regel aus dem Kesselspeisewasser stammende weitere Gase, wie beispielsweise Sauerstoff und inerte Gase, die im Kesselspeisewasser gelöst waren. Insoweit meint Niederdruck-Wasserdampf auch ein Niederdruck-Wasserdampf/Gas-Gemisch. An die Kühleinrichtung 10 ist bevorzugt und im Ausführungsbeispiel ein Wasserbehälter 11 (Kesselspeisewasser-Behälter) angeschlossen, in dem der Niederdruck-Wasserdampf von dem Kesselspeisewasser durch Entspannungsverdampfung getrennt wird. Dabei ist der Wasserbehälter 11 mit der Maßgabe an die Zwischen-Absorptionseinrichtung 3 angeschlossen, dass Niederdruck-Wasserdampf von diesem Wasserbehälter 11 über die Einspeiseleitung 18 in die Zwischen-Absorptionseinrichtung 3 eingeführt wird. Fernerhin wird vorzugsweise und im Ausführungsbeispiel verbleibendes erhitztes Kesselspeisewasser aus dem Wasserbehälter 11 abgezogen und zwar zweckmäßigerweise und im Ausführungsbeispiel zum einen Mitteldruck-Kesselspeisewasser über die erste Wasserleitung 19 abgeführt und zum anderen Hochdruck-Kesselspeisewasser über die zweite Wasserleitung 20 abgeführt. Dabei wird dieses abgeführte Kesselspeisewasser empfohlenermaßen für den Wärmeaustausch an anderen Anlagenkomponenten eingesetzt. Empfohlenermaßen und im Ausführungsbeispiel wird das Mitteldruck-Kesselspeisewasser über die erste Wasserleitung 19 dem Mitteldruck-Dampfkessel 9 zugeführt und dort mit Hilfe der aus der Zwischen-Absorptionseinrichtung 3 abgezogenen erhitzten Schwefelsäure erhitzt und zu Mitteldruck-Dampf verdampft. Bevorzugt und im Ausführungsbeispiel wird das über die zweite Wasserleitung 20 abgeführte Hochdruck-Kesselspeisewasser zur Erwärmung des der End-Absorptionseinrichtung 12 zugeführten Prozessgases verwendet.

Die in der Wasserdampferzeugungseinrichtung 4 für die Erzeugung des Niederdruck-Wasserdampfes eingesetzte Schwefelsäure wird bevorzugt und im Ausführungsbeispiel als abgekühlte Schwefelsäure über die Abzugsleitung 21 aus der Wasserdampferzeugungseinrichtung 4 abgezogen. Empfohlenermaßen und im Ausführungsbeispiel wird diese abgekühlte Schwefelsäure einem Pumpentank 22 zugeführt, wobei bevorzugt und im Ausführungsbeispiel in diesem Pumpentank 22 drei Pumpen 23, 24 und 25 angeordnet sind. Mit der ersten Pumpe 24 wird die abgekühlte Schwefelsäure über die Trocknungsleitung 26 in die Trocknungseinrichtung 5 zur Trocknung der ersten Oxidationseinrichtung 1 zugeführten Luft eingeleitet. Zweckmäßigerweise und im Ausführungsbeispiel wird die für die Trocknung in der Trocknungseinrichtung 5 eingesetzte Schwefelsäure am Sumpf der Trocknungseinrichtung 5 abgezogen und bevorzugt mit der zweiten Pumpe 23 des Pumpentanks 22 aus der Anlage ausgeschleust. Mit der ersten Pumpe 24 kann fernerhin abgekühlte Schwefelsäure über die Zuführungsleitung 27 in die Zwischen-Absorptionseinrichtung 3 eingeführt werden. Die dritte Pumpe 25 dient dem Schwefelsäure-Kreislauf der End-Absorptionseinrichtung 12. In dieser End-Absorptionseinrichtung 12 wird Schwefelsäure im Gegenstrom zu dem durch die Leitung 33 eingeführten schwefeltrioxidhaltigen Prozessgas geführt und im Sumpf 29 der End-Absorptionseinrichtung 12 resultiert erhitzte Schwefelsäure. Diese erhitzte Schwefelsäure wird aus dem Sumpf 29 abgezogen und dann bevorzugt und im Ausführungsbeispiel in dem Wärmetauscher 30 zur Erwärmung des der Kühleinrichtung 10 zugeführten Wassers / Kesselspeisewassers eingesetzt.

In dem Pumpentank 22 sind bevorzugt und im Ausführungsbeispiel Pumpenkammern für die Pumpen 23, 24 und 25 mit Überlaufwänden 28 voneinander getrennt. Beim Überlaufen einer Pumpenkammer über eine Überlaufwand 28 kann die abgekühlte Schwefelsäure dann von der jeweils benachbarten Pumpe 23, 24, 25 abgefördert werden.

## Patentansprüche

1. Verfahren zur Herstellung von Schwefelsäure, wobei Schwefel mittels Luft in zumindest einer ersten Oxidationsstufe zu Schwefeldioxid oxidiert wird, wobei das Schwefeldioxid in zumindest einer insbesondere zweiten Oxidationsstufe zu Schwefeltrioxid oxidiert wird, wobei Schwefeltrioxid in zumindest einer Absorptionsstufe unter Bildung von Schwefelsäure absorbiert wird, und wobei erhitzte Schwefelsäure aus der Absorptionsstufe abgezogen wird und zur Erzeugung von Wasserdampf eingesetzt wird, welcher Wasserdampf zum Teil in die Absorptionsstufe eingeführt wird, wobei schwefeldioxidhaltiges und schwefeltrioxidhaltiges Prozessgas aus der insbesondere zweiten Oxidationsstufe in die als Zwischen-Absorptionsstufe ausgebildete Absorptionsstufe eingeführt wird, wobei das Prozessgas nach Absorption von Schwefeltrioxid aus der Zwischen-Absorptionsstufe in die insbesondere zweite Oxidationsstufe zurückgeführt wird und wobei die erhitzte Schwefelsäure aus der Zwischen-Absorptionsstufe abgezogen wird.

2. Verfahren nach Anspruch 1, wobei das Prozessgas nach Durchströmen der insbesondere zweiten Oxidationsstufe in zumindest eine End-Absorptionsstufe eingeführt wird und wobei aus der insbesondere zweiten Oxidationsstufe stammendes Schwefeltrioxid in der End-Absorptionsstufe absorbiert wird, vorzugsweise von Schwefelsäure absorbiert wird.

3. Verfahren nach einem der Ansprüche 1 oder 2, wobei die aus der Absorptionsstufe abgezogene erhitzte Schwefelsäure einer Wärmerückgewinnungseinrichtung (8) zugeführt wird, in der von der Schwefelsäure mitgeführte Wärmeenergie zurückgewonnen wird, insbesondere in Form von Dampf und vorzugsweise in Form von Mitteldruck-Dampf zurückgewonnen wird, und wobei die dabei abgekühlte Schwefelsäure zumindest zum Teil zur Erzeugung des Wasserdampfes eingesetzt wird.

4. Verfahren nach einem der Ansprüche 1 bis 3, wobei die aus der Absorptionsstufe oder die aus der Wärmerückgewinnungseinrichtung (8) abgezogene Schwefelsäure einer Wasserdampferzeugungseinrichtung (4) zugeführt wird, wobei in der Wasserdampferzeugungseinrichtung (4) Wasser, insbesondere Kesselspeisewasser mittels der Schwefelsäure erhitzt wird und zumindest zum Teil in Wasserdampf, vorzugsweise in Niederdruck-Wasserdampf umgewandelt wird, wobei dieser Wasserdampf in die Absorptionsstufe eingeführt wird.

5. Verfahren nach einem der Ansprüche 1 bis 4, wobei aus der Wasserdampferzeugungseinrichtung (4) abgezogene abgekühlte Schwefelsäure einer/der End-Absorptionsstufe zugeführt wird, in welcher Schwefeltrioxid im Gegenstrom zur Schwefelsäure geführt und von der Schwefelsäure absorbiert wird.

6. Verfahren nach einem der Ansprüche 1 bis 5, wobei aus der Wasserdampferzeugungseinrichtung (4) abgezogene abgekühlte Schwefelsäure zur Trocknung der für die Oxidation des Schwefels in der ersten Oxidationsstufe erforderlichen Luft eingesetzt wird.

7. Verfahren nach einem der Ansprüche 1 bis 6, wobei aus der Wasserdampferzeugungseinrichtung (4) abgezogene abgekühlte Schwefelsäure zur Absorption von Schwefeltrioxid in die Absorptionsstufe eingeführt wird, wobei das Schwefeltrioxid vorzugsweise im Gegenstrom zur Schwefelsäure geführt wird.

8. Vorrichtung zur Herstellung von Schwefelsäure, insbesondere zur Durchführung des Verfahrens nach einem der Ansprüche 1 bis 7, wobei eine erste Oxidationseinrichtung (1) für die Erzeugung von Schwefeldioxid vorhanden ist, wobei eine insbesondere zweite Oxidationseinrichtung (2) für die Oxidation des Schwefeldioxids zu Schwefeltrioxid vorgesehen ist, wobei an die insbesondere zweite Oxidationseinrichtung (2) zumindest eine Absorptionseinrichtung für die Absorption des Schwefeltrioxids mittels Schwefelsäure angeschlossen ist, wobei die Absorptionseinrichtung (3) an eine Wasserdampferzeugungseinrichtung (4) mit der Maßgabe angeschlossen ist, dass aus der Absorptionseinrichtung abgezogene Schwefelsäure der Wasserdampferzeugungseinrichtung (4) zwecks Erzeugung von Wasserdampf zuführbar ist, und wobei aus der Wasserdampferzeugungseinrichtung (4) über zumindest eine Einspeiseleitung (18) Wasserdampf in die Absorptionseinrichtung einführbar ist, wobei die insbesondere zweite Oxidationseinrichtung (2) als mehrstufiger, vorzugsweise zweistufiger Konverter ausgebildet ist, wobei eine erste Konverterstufe (6) über zumindest eine Prozessgas-Abführungsleitung (14) mit der Absorptionseinrichtung (3) verbunden ist, und wobei die Absorptionseinrichtung (3) über zumindest eine Prozessgas-Zuführungsleitung (15) mit einer zweiten Konverterstufe (7) der insbesondere zweiten Oxidationseinrichtung (2) verbunden ist, so dass Prozessgas aus der ersten Konverterstufe (6) der insbesondere zweiten Oxidationseinrichtung (2) durch die Absorptionseinrichtung (3) leitbar ist und in die zweite Konverterstufe (7) einführbar ist.

9. Vorrichtung nach dem vorhergehenden Anspruch, wobei eine Trocknungseinrichtung (5) zur Trocknung von Luft vorgesehen ist, welche Luft in die erste Oxidationseinrichtung (1) zur Oxidation von Schwefel zu Schwefeldioxid einführbar ist, und wobei die Trocknungseinrichtung (5) mit der Maßgabe mit der Absorptionseinrichtung verbunden ist, dass überschüssige Schwefelsäure aus der Absorptionseinrichtung (3) zur Trocknung der Luft in die Trocknungseinrichtung (5) einführbar ist.

10. Vorrichtung nach einem der vorhergehenden Ansprüche, wobei die Absorptionseinrichtung (3) an eine Wärmerückgewinnungseinrichtung (8) mit zumindest einem Dampfkessel (9), vorzugsweise mit zumindest einem Mitteldruck-Dampfkessel angeschlossen ist, wobei erhitzte Schwefelsäure aus der Absorptionsstufe (3) zwecks Erzeugung von Dampf in den Dampfkessel (9) einführbar ist und, wobei abgekühlte Schwefelsäure aus dem Dampfkessel (9) abführbar und in die Absorptionsstufe (3) zurückführbar und/oder der Wasserdampferzeugungseinrichtung (4) zuführbar ist.

11. Vorrichtung nach einem der vorhergehenden Ansprüche, wobei die Wasserdampferzeugungseinrichtung (4) zumindest eine Kühleinrichtung (10) aufweist, in der Wasser erwärmt und zumindest teilweise verdampft wird, wobei an die Kühleinrichtung (10) zumindest ein Wasserbehälter (11), vorzugsweise ein Kesselspeise-Wasserbehälter, angeschlossen ist, in welchem Wasserbehälter (11) der Wasserdampf von dem Wasser durch Entspannungsverdampfung getrennt wird und wobei der Wasserbehälter (11) an die Absorptionseinrichtung (3) angeschlossen ist, so dass Wasserdampf von dem Wasserbehälter (11) in die Absorptionseinrichtung einleitbar ist.

12. Vorrichtung nach einem der vorhergehenden Ansprüche, wobei die Wasserdampferzeugungseinrichtung (4) mit der End-Absorptionseinrichtung (12) verbunden ist und/oder mit der Trocknungseinrichtung (5) für die Trocknung der der ersten Oxidationseinrichtung (1) zugeführten Luft verbunden ist, so dass aus der Wasserdampferzeugungseinrichtung (4) abgezogene abgekühlte Schwefelsäure in die Trocknungseinrichtung (5) für die Trocknung der Luft einführbar ist und/oder in die End-Absorptionseinrichtung (12) zur Absorption von Schwefeltrioxid einleitbar ist.

13. Vorrichtung nach einem der vorhergehenden Ansprüche, wobei die Wasserdampferzeugungseinrichtung (4) an die Absorptionseinrichtung (3) mit der Maßgabe angeschlossen ist, dass aus der Wasserdampferzeugungseinrichtung (4) abgezogene abgekühlte Schwefelsäure zur Absorption von Schwefeltrioxid in die Absorptionseinrichtung einführbar ist.

14. Vorrichtung nach einem der vorhergehenden Ansprüche, wobei der aus der Wasserdampferzeugungseinrichtung (4) abgezogene Wasserdampf zusammen mit dem aus der insbesondere zweiten Oxidationseinrichtung (2) abgezogenen Prozessgas in die Absorptionseinrichtung (3) einführbar ist.

15. Vorrichtung nach einem der vorhergehenden Ansprüche, wobei die Absorptionsstufe als Zwischen-Absorptionsstufe ausgebildet ist.

## Claims

1. A process for preparing sulfuric acid, wherein usefully sulfur is oxidized to sulfur dioxide by means of air, more particularly by means of dried air, in at least one first oxidation stage, the sulfur dioxide is oxidized to sulfur trioxide in at least one oxidation stage, more particularly in at least one second oxidation stage, sulfur trioxide is absorbed in at least one absorption stage to form sulfuric acid, more particularly is absorbed by sulfuric acid, and heated sulfuric acid is drawn off from the absorption stage and used for generating steam, which is introduced partly into the absorption stage , wherein process gas from the oxidation stage, more particularly from the second oxidation stage, containing sulfur dioxide and containing sulfur trioxide, is introduced into the absorption stage, which is designed as an intermediate absorption stage, the process gas, after absorption of sulfur trioxide, is recycled from the intermediate absorption stage to the oxidation stage, more particularly to the second oxidation stage, and the heated sulfuric acid is drawn off from the intermediate absorption stage.

2. The process as claimed claim 1, wherein the process gas, after flowing through the oxidation stage, more particularly the second oxidation stage, is introduced into at least one final absorption stage, and sulfur trioxide originating from the oxidation stage, more particularly from the second oxidation facility, is absorbed in the final absorption stage, and preferably is absorbed by sulfuric acid.

3. The process as claimed in either of claims 1 and 2, wherein the heated sulfuric acid drawn off from the absorption stage, more particularly from the intermediate absorption stage, is supplied to a heat recovery facility (8), in which thermal energy carried by the sulfuric acid is recovered, more particularly in the form of vapor and preferably in the form of medium-pressure vapor, and the sulfuric acid cooled in this process is used at least partly for generating the steam.

4. The process as claimed in any of claims 1 to 3, wherein the sulfuric acid drawn off from the absorption stage, more particularly intermediate absorption stage, or from the heat recovery facility (8) is supplied to a steam generation facility (4), water, more particularly boiler feed water, is heated by means of the sulfuric acid in the steam generation facility (4) and is converted at least partly into steam, preferably into low-pressure steam, and this steam, preferably low-pressure steam, is introduced into the absorption stage, more particularly into the intermediate absorption stage.

5. The process as claimed in any of claims 1 to 4, wherein cooled sulfuric acid drawn off from the steam generation facility (4) is supplied to the final absorption stage, in which sulfur trioxide is passed in countercurrent to the sulfuric acid and is absorbed by the sulfuric acid.

6. The process as claimed in any of claims 1 to 5, wherein cooled sulfuric acid drawn off from the steam generation facility (4) is used for drying the air required for the oxidation of the sulfur in the first oxidation stage.

7. The process as claimed in any of claims 1 to 6, wherein cooled sulfuric acid drawn off from the steam generation facility (4) is introduced into the absorption stage, more particularly into the intermediate absorption stage, for the absorption of sulfur trioxide, and the sulfur trioxide is preferably passed in countercurrent to the sulfuric acid.

8. An apparatus for preparing sulfuric acid, more particularly for implementing the process as claimed in any of claims 1 to 7, wherein usefully there is a first oxidation facility (1) for generating sulfur dioxide, there is an oxidation facility (2), more particularly second oxidation facility (2), preferably joined to the first oxidation facility, for the oxidation of the sulfur dioxide to sulfur trioxide, and at least one absorption facility, more particularly an intermediate absorption facility (3), is joined to the oxidation facility, more particularly to the second oxidation facility (2), for absorbing the sulfur trioxide by means of sulfuric acid, the absorption facility, more particularly the intermediate absorption facility (3), is joined to a steam generation facility (4), with the proviso that sulfuric acid drawn off from the absorption facility, more particularly intermediate absorption facility (3), can be supplied to the steam generation facility (4) for the purpose of generating steam, and steam can be introduced into the absorption facility, more particularly intermediate absorption facility (3), from the steam generation facility (4) via at least one feed line 18, wherein the oxidation facility (2), more particularly the second oxidation facility (2), is configured as a multistage, preferably two-stage, converter, a first converter stage (6) is connected via at least one process gas discharge line (14) to the absorption facility, more particularly intermediate absorption facility (3), and the absorption facility, more particularly intermediate absorption facility (3), is connected via at least one process gas supply line (15) to a second converter stage (7) of the oxidation facility (2), more particularly of the second oxidation facility (2), so that process gas from the first converter stage (6) of the oxidation facility (2), more particularly of the second oxidation facility (2), can be passed through the absorption facility, more particularly intermediate absorption facility (3), and can be introduced into the second converter stage (7).

9. The apparatus as claimed in claim 8, wherein there is a drying facility (5) for drying air, which air can be introduced into the first oxidation facility (1) for oxidizing sulfur to sulfur dioxide, and the drying facility (5) is connected to the absorption facility, more particularly intermediate absorption facility (3), with the proviso that excess sulfuric acid from the absorption facility, more particularly intermediate absorption facility (3), can be introduced into the drying facility (5) for drying the air.

10. The apparatus as claimed in any of claims 8 to 9, wherein the absorption facility, more particularly intermediate absorption facility (3), is joined to a heat recovery facility (8) having at least one boiler (9), preferably having at least one medium-pressure boiler, heated sulfuric acid from the absorption stage, more particularly intermediate absorption stage (3), can be introduced into the boiler (9) for the purpose of generating vapor, preferably medium-pressure vapor, and cooled sulfuric acid from the boiler (9) can be discharged and can be recycled to the absorption stage, more particularly intermediate absorption stage (3), and/or can be supplied to the steam generation facility (4).

11. The apparatus as claimed in any of claims 8 to 10, wherein the steam generation facility (4) comprises at least one cooling facility (10), in which water, preferably boiler feed water, is heated and at least partly evaporated, the cooling facility (10) has at least one water vessel (11) joined to it, preferably a boiler feed water vessel, in which water vessel (11) the steam is separated from the water, more particularly from the boiler feed water, by flash evaporation, and the water vessel (11) is joined to the absorption facility, more particularly intermediate absorption facility (3), so that steam can be passed from the water vessel (11) into the absorption facility, more particularly intermediate absorption facility.

12. The apparatus as claimed in any of claims 8 to 11, wherein the steam generation facility (4) is connected to the final absorption facility (12) and/or is connected to the drying facility (5) for drying the air supplied to the first oxidation facility (1), so that cooled sulfuric acid drawn off from the steam generation facility (4) can be introduced into the drying facility (5) for drying the air and/or can be passed into the final absorption facility (12) for absorbing sulfur trioxide.

13. The apparatus as claimed in any of claims 8 to 12, wherein the steam generation facility (4) is joined to the absorption facility, more particularly intermediate absorption facility (3), with the proviso that cooled sulfuric acid drawn off from the steam generation facility (12) can be introduced into the absorption facility, more particularly intermediate absorption facility, for absorbing sulfur trioxide.

14. The apparatus as claimed in any of claims 8 to 13, wherein the steam drawn off from the steam generation facility (4) can be introduced together with the process gas drawn off from the oxidation facility (2), more particularly from the second oxidation facility (2), into the absorption facility, more particularly intermediate absorption facility (3).

15. The apparatus as claimed in any of claims 8 to 14, wherein the absorption stage is configured as an intermediate absorption stage.

## Revendications

1. Procédé de production d'acide sulfurique, le soufre étant oxydé en dioxyde de soufre avec de l'air dans au moins un premier étage d'oxydation, le dioxyde de soufre étant oxydé en trioxyde de soufre dans au moins un deuxième étage d'oxydation, en particulier, le trioxyde de soufre étant absorbé dans au moins un étage d'absorption avec formation d'acide sulfurique, et de l'acide sulfurique chauffé étant retiré de l'étage d'absorption et utilisé pour générer de la vapeur d'eau, laquelle vapeur d'eau étant en partie introduite dans l'étage d'absorption, du gaz de traitement contenant du dioxyde de soufre et du trioxyde de soufre étant introduit depuis le deuxième étage d'oxydation, en particulier, dans l'étage d'absorption formé en tant qu'étage d'absorption intermédiaire, le gaz de traitement étant renvoyé, après l'absorption du trioxyde de soufre, de l'étage d'absorption intermédiaire dans le deuxième étage d'oxydation, en particulier, et l'acide sulfurique chauffé étant tiré de l'étage d'absorption intermédiaire.

2. Procédé selon la revendication 1, le gaz de traitement étant introduit dans au moins un étage d'absorption final après être passé par le deuxième étage d'oxydation, en particulier, et le trioxyde de soufre provenant du deuxième étage d'oxydation, en particulier, étant absorbé dans l'étage d'absorption final, de préférence étant absorbé par l'acide sulfurique.

3. Procédé selon l'une des revendications 1 et 2, l'acide sulfurique chauffé tiré de l'étage d'absorption étant envoyé à un moyen de récupération de chaleur (8) dans lequel l'énergie thermique amenée par l'acide sulfurique est récupérée, notamment sous forme de vapeur et de préférence sous forme de vapeur à moyenne pression, et l'acide sulfurique alors refroidi étant utilisé au moins en partie pour générer la vapeur d'eau.

4. Procédé selon l'une des revendications 1 à 3, l'acide sulfurique tiré de l'étage d'absorption ou du moyen de récupération de chaleur (8) étant envoyé à un moyen de génération de vapeur d'eau (4), en particulier de l'eau d'alimentation de chaudière étant chauffée avec de l'acide sulfurique et au moins partiellement convertie en vapeur, de préférence en vapeur basse pression, dans le moyen de génération de vapeur d'eau (4) de l'eau, cette vapeur d'eau étant introduite dans l'étage d'absorption.

5. Procédé selon l'une des revendications 1 à 4, l'acide sulfurique refroidi tiré du moyen de génération de vapeur d'eau (4) étant envoyé à un étage/l'étage d'absorption final dans lequel le trioxyde de soufre est amené à contre-courant de l'acide sulfurique et absorbé par l'acide sulfurique.

6. Procédé selon l'une des revendications 1 à 5, l'acide sulfurique refroidi tiré du moyen de génération de vapeur d'eau (4) étant utilisé pour sécher l'air requis pour l'oxydation du soufre dans le premier étage d'oxydation.

7. Procédé selon l'une des revendications 1 à 6, de l'acide sulfurique refroidi tiré du moyen de génération de vapeur d'eau (4) étant introduit dans l'étage d'absorption afin d'absorber le trioxyde de soufre, le trioxyde de soufre étant de préférence amené à contre-courant de l'acide sulfurique.

8. Dispositif de production d'acide sulfurique, notamment de mise en œuvre du procédé selon l'une des revendications 1 à 7, un premier moyen d'oxydation (1) étant prévu pour produire du dioxyde de soufre, un deuxième moyen d'oxydation (2), en particulier, étant prévu pour oxyder le dioxyde de soufre en trioxyde de soufre, au moins un moyen d'absorption destiné à l'absorption du trioxyde de soufre à l'aide d'acide sulfurique étant raccordé au deuxième moyen d'oxydation (2), en particulier, le moyen d'absorption (3) étant raccordé à un moyen de génération de vapeur d'eau (4) à condition que l'acide sulfurique tiré du moyen d'absorption puisse être introduit dans le moyen de génération de vapeur d'eau (4) afin de générer de la vapeur, et de la vapeur d'eau pouvant être introduite dans le moyen d'absorption à partir du moyen de génération de vapeur d'eau (4) par le biais d'au moins une conduite d'alimentation (18), le deuxième moyen d'oxydation (2), en particulier, étant conçu comme un convertisseur à plusieurs étages, de préférence à deux étages, un premier étage de conversion (6) étant raccordé au moyen d'absorption (3) par le biais d'au moins une conduite d'évacuation de gaz de traitement (14), et le moyen d'absorption (3) étant raccordé par le biais d'au moins une conduite d'alimentation en gaz de traitement (15) à un deuxième étage de conversion (7) du deuxième moyen d'oxydation (2), en particulier, de sorte que du gaz de traitement puisse être guidé du premier étage de conversion (6) du deuxième moyen d'oxydation (2), en particulier, à travers le moyen d'absorption (3) et puisse être introduit dans le deuxième étage de conversion (7).

9. Dispositif selon la revendication précédente, un moyen de séchage (5) étant prévu pour sécher l'air, lequel air peut être introduit dans le premier moyen d'oxydation (1) pour oxyder le soufre en dioxyde de soufre, et le moyen de séchage (5) étant raccordé au moyen d'absorption à condition que l'excès d'acide sulfurique provenant du moyen d'absorption (3) puisse être introduit dans le moyen de séchage (5) pour sécher l'air.

10. Dispositif selon l'une des revendications précédentes, le moyen d'absorption (3) étant raccordé à un moyen de récupération de chaleur (8) comprenant au moins une chaudière à vapeur (9), de préférence au moins une chaudière à vapeur moyenne pression, de l'acide sulfurique chauffé provenant de l'étage d'absorption (3) pouvant être introduit dans la chaudière à vapeur (9) afin de générer de la vapeur et, l'acide sulfurique refroidi pouvant être évacué de la chaudière à vapeur (9) et ramené à l'étage d'absorption (3) et/ou ramené au moyen de génération de vapeur d'eau (4) .

11. Dispositif selon l'une des revendications précédentes, le moyen de génération de vapeur d'eau (4) comportant au moins un moyen de refroidissement (10) dans lequel de l'eau est chauffée et au moins partiellement évaporée, au moins un réservoir d'eau (11), de préférence un réservoir d'eau d'alimentation de chaudière, étant raccordé au moyen de refroidissement (10), réservoir d'eau (11) dans lequel la vapeur d'eau est séparée de l'eau par évaporation éclair et le réservoir d'eau (11) étant raccordé au moyen d'absorption (3) de sorte que la vapeur d'eau provenant du réservoir d'eau (11) puisse être introduite dans le moyen d'absorption.

12. Dispositif selon l'une des revendications précédentes, le moyen de génération de vapeur d'eau (4) étant raccordé au moyen d'absorption final (12) et/ou au moyen de séchage (5) destiné à sécher l'air amené au premier moyen d'oxydation (1) de sorte que l'acide sulfurique refroidi tiré du moyen de génération de vapeur d'eau (4) puisse être introduit dans le moyen de séchage (5) destiné à sécher l'air et/ou dans le moyen d'absorption final (12) destiné à absorber le trioxyde de soufre.

13. Dispositif selon l'une des revendications précédentes, le moyen de génération de vapeur d'eau (4) étant raccordé au moyen d'absorption (3) à condition que l'acide sulfurique refroidi tiré du moyen de génération de vapeur d'eau (4) puisse être introduit dans le moyen d'absorption afin d'absorber le trioxyde de soufre.

14. Dispositif selon l'une des revendications précédentes, la vapeur d'eau tirée du moyen de génération de vapeur d'eau (4) pouvant être introduite dans le moyen d'absorption (3) conjointement avec le gaz de traitement tiré du deuxième moyen d'oxydation (2), en particulier.

15. Dispositif selon l'une des revendications précédentes, l'étage d'absorption étant conçu comme un étage d'absorption intermédiaire.
